# EUROPEAN PATENT SPECIFICATION

(11) **EP 2 347 019 B1**
(45) Date of publication and mention of the grant of the patent: **17.05.2017**
(21) Application number: 09748251.7
(22) Date of filing: 29.10.2009
(51) Int. Cl.: C21D 1/84, C21D 5/00, C21D 9/18, B26D 1/00, B29B 9/06, C22C 38/22, C22C 38/24

(54) **SHARPENING METHOD FOR GRANULATOR BLADES WITH A HIGH WEAR RESISTANCE**
SCHÄRFUNGSVERFAHREN FÜR GRANULATORSCHAUFELN MIT HOHER VERSCHLEISSFESTIGKEIT
PROCÉDÉ D'AFFÛTAGE POUR LAMES DE GRANULATEUR À HAUTE RÉSISTANCE À L'USURE

(30) Priority: 07.11.2008 IT MI20081970
(43) Date of publication of application: 27.07.2011
(73) Proprietor: versalis S.p.A., 20097 San Donato Milanese (MI) (IT)
(72) Inventor: FELISARI, Riccardo, I-46030 San Giorgio di Mantova (MN) (IT); CASALINI, Alessandro, I-46100 Mantova (IT)
(74) Representative: Bottero, Carlo
(86) International application number: PCT/EP2009/007779
(87) International publication number: WO 2010/051943

(56) References cited:
- WO-A1-03/000944
- WO-A1-03/053650
- DE-A1- 2 508 031
- GB-A- 1 404 952
- US-B1- 6 348 109

## Description

### FIELD OF APPLICATION

The present invention relates to granulator blades with a high wear resistance and the relative sharpening method.

The blades can be used in granulators for thermoplastic polymers, such as for example water-ring, underwater and water spray granulators.

Vinyl and vinyl aromatic polymers, optionally expandable, are among the thermoplastic polymers to which the present invention can be applied. More specifically, it can be applied to the granulation of polystyrene, expandable polystyrene and its alloys.

All the conditions specified in the text should be considered as being preferred even if not explicitly indicated.

### DESCRIPTION OF THE KNOWN ART

The cutting of thermoplastic polymers in the molten state can be effected by passing them through a series of holes situated in a die plate, followed by cutting the polymer still in the molten state by means of a specific device.

The cutting can be effected with the use of a series of knives, in continuous rotation and with the cutting blade in correspondence with the surface of the die plate.

The granules thus obtained are cooled and removed by means of a thermo-regulator fluid.

Various systems for the granulation of the polymer use the technique described above. Among these, the water spray polymer cutting technology, as described in patent WO 03/053650, underwater and water ring technologies are of particular importance. These and other technologies are illustrated in numerous patents or patent applications, among which US 4,752,196; WO 03/106544; WO 03/053650; WO 2007/087001; WO 2007/089497.

In some applications, however, the granulation can be problematical. In particular, a difficulty to be solved is obtaining a long-lasting cutting system, i.e. capable of reducing the frequency of replacement of the knives. The duration of the knives strictly depends on their wear rate caused by friction against the die plate and also by the same cutting operation of the polymer.

Various technological solutions have been developed for obtaining an adequate reliability, together with a high cutting quality (such as the absence of scrap and generation of polymer powder).

Patent application WO 2007/089497 describes particular knife geometries and relative knife-holder hub, so that the first are almost perpendicular with respect to the surface of the die plate. This geometry allows a better detachment of the beads of molten polymer from the surface of the knife.

Patent application WO 03/053650 describes a water spray cutting method which allows the cooling rate of the granule to be regulated with the use of a spray of thermovector fluid which only occupies a part of the volume of the granulator, the remaining part being occupied by gas. In this way, both the quality of the granulation and the tendency of the holes to become clogged are controlled.

Patent application US 2005/0126015 describes particular configurations of rotating knives and the relative supporting structure, capable of ensuring a reduced friction. This allows the vibration and heating of the knives to be minimized.

The patent US 7,296,985 illustrates particular equipment for the granulation of thermoplastic polymers, equipped with a device for the transmission of the torque between a shaft which can be moved axially and the knife-holder hub.

Patent application WO 2007/087001 describes a method for the start-up of granulators for thermoplastic resins. By using particular die plates, this method allows to start pelletizing both by avoiding both excessive cooling, that could clog the holes of the die plate, and also by ensuring a sufficient cooling for obtaining a good quality of the granulate.

The knives are typically kept under pressure against the surface of the die plate, in order to ensure a good cutting quality. The pressure, together with the high rotation rates, causes a high wear of the same knives. This wear is an important limitation for industrial plants, where the granulation is typically effected in continuous and where maintenance breaks therefore correspond to a reduction in the production capacity of the plant.

This wear is more marked when polymer resins are employed containing inorganic additives with a considerable hardness, or at a high concentration, or in both cases. Examples of these applications are described in patents US 6,340,713 and EP 1514895.

The wear is particularly critical in the cutting of more flowing resins, such as expandable resins, and in micro-granulation. Under these conditions, in fact, it is necessary to ensure a maximum adherence of the knives to the surface of the granulator. This high adherence causes, as a consequence, a high wear by abrasion.

The material of which the cutting knives are made is of critical importance for limiting their wear and for a correct and long-lasting granulation of the polymer.

As is known, the use of extremely hard materials allows the life duration of the blades to be increased. The surface of the die plate must therefore be harder than the blades so that these are the first to become worn. Alternatively, it is sufficient for only a part of the die plate surface, even a minority, to be made of a harder material, as while rotating the knives around the axis, at least a part of the blade is always in contact with said harder material.

Among materials for knives which are most widely used for these applications, are cold work tool steels. Some of these, such as for example, type K100 of Bohler-Uddeholm, ensure a high dimensional stability, have a sufficient resilience and a considerable hardness (Rockwell), for example higher than 50 HRC.

However, especially in the applications mentioned above, knives made with these materials are also subjected to significantly high wear for industrial use.

Another example of a material which can be used for producing knife blades is represented by ledeburite steels. Although these have an adequate wear resistance, they have a limited processability in the sharpening phase. Furthermore, the significant hardness can make high-quality granulation difficult, due to the excessive rigidity of the blade and consequent reduced adherence of the same to the surface of the die plate.

A part from the material, the control system of the thrust pressure of the knives on the die plate is also fundamental. The knives are normally thrust against the die plate surface by means of a suitable system, for example an oil-dynamic system which ensures a predetermined thrust on the hub on which the knives are rigidly applied.

In these systems, the wear can be controlled by reducing the pressure which acts on the knives. This operation can be dangerous, however. In this way, in fact, the contact of the knives on the cutting surface may no longer be guaranteed due to the vibrations, induced by the rotating system, and due to the polymer thrust. When there is no support, the knives withdraw and the granulation loses its quality or becomes impossible.
USP 6,348,109 discloses a steel material which is manufactured in a non-powder metallurgical way. The steel material consists of an alloy;
WO 03/000944 discloses a cold work steel material suited to be used also for machine knives;
GB 1,404,952 discloses dies and punches made from ledeburitic chromium steel and suited to be subjected to particularly high compressive stresses;
DE 25 08 031 discloses a multi-layer cutting tool the cutting part of which are made from ledeburitic chrome steel, wherein all the layers are metallically bonded together by pressure welding.

In the whole of the present document, the terms "shear quality" and "granulation quality" should be considered equivalent.

### DESCRIPTION OF THE INVENTION

According to the present invention, described in the claims, the material used for the knives is steel with a high resistance to wear. The material is preferably cold work tool steel, such as ledeburitic steels, possibly obtained by powder metallurgy.

Even more preferably, the material is an alloy steel based on chromium, molybdenum and vanadium.

Preferred examples of these materials contain, by weight, 1-4% of carbon, 4-12% of chromium, 1-5% of molybdenum, 0-0.7% of manganese, 3-12% of vanadium and 0-1.5% of silicon.

Examples of these materials are Vanadis-4 Extra, Vanadis-6 and Vanadis-10, produced by Bohler-Uddeholm and described in US patents 7,297,177, 6,818,040 and 6,348,109.

Sometimes the use of knives made with this type of steel does not allow to obtain a satisfactory granulation, unless with a particular procedure, object of the present invention.

As already mentioned, in fact, the use of high hardness steels improves the duration but reduces the cut quality. Vice versa, softer knives provide a high cut quality to the detriment of the duration.

The knives are advantageously thermally treated before being assembled on the cutting system. The thermal treatment comprises the step of heating the knives to a temperature ranging from 500 to 700°C; more preferably from 550 to 650°C.

The knives are kept at this temperature for a time greater than 5 minutes, more typically greater than 20 minutes, for example from 35 to 250 minutes and are then slowly cooled, until a temperature equal to or lower than 500°C, for example at an average cooling rate equal to or lower than 15°C/minute, for example up to 450°C, more preferably lower than 10°C per minute.

The hardness of thermally treated knife is generally lower than the non-treated knife. The reduction in hardness is typically from 2 to 20 Rockwell degrees, scale C.

Surprisingly, knives prepared according to this procedure are very resistant to wear, in spite of this reduction in hardness and even if applied on die plates characterized by a higher surface hardness, for example starting from 10 Rockwell C degrees. This allows obtaining an improved granulation quality, at the same time maintaining a considerable life prolongation of knives, during the granulator running.

Furthermore, the use of knives, prepared according to the method described in the present application, allows obtaining a simplification of the restarting operations of granulation device after the substitution of the same knives, as described hereunder. It is known that, in order to obtain a high-quality granulation, it is essential to ensure an adequate support for the knives on the die plate surface. In order to obtain this result, the knives are typically fixed to the hub while they are held against a flat, smooth supporting surface. In some cases, however, such as micro-granules or expandable polymers cutting, this fixing procedure is not sufficient for obtaining an adequate cutting quality.

In these cases, an even higher correspondence between the surface generated by rotating knives and die plate, is in fact necessary. This correspondence can be obtained by means of a sharpening operation where knives are partially worn against the die plate surface. Traditional knives made of steel, such as K100 produced by Bohler, have a low resistance to wear, thus they are easily abraded against the die plate surface and therefore easily sharpened. At the same time, the life of knives is modest.

The use of steels with a higher wear resistance produces a significant duration increase, but generally sharpening is difficult, requiring long times and particular operating conditions. Although the knives maintain a considerable resistance to abrasion wear, they are surprisingly easy to sharpen, thus accelerating the restarting operations of granulation device.

The sharpening is conducted by subjecting the knives, kept in a rotating movement, to a thrust, towards the surface of the die plate, greater than 0.5 N per knife, for example greater than 1 N per knife, preferably between 20 and 100 N. Furthermore, as is known, during the knife sharpening, conducted before feeding the molten polymer to the die plate, the blades which are abraded against the die plate must be continuously cooled to avoid overheating due to friction. A method has also been surprisingly found for facilitating and accelerating the sharpening process of the knives, according to the present invention. This method consists in reducing the blade cooling during the sharpening phase with respect to the value adopted during the granulation phase. In water spray granulators or, more generally, in granulators where the volume fraction of gas is greater than 0.6 and lower than 1, this method can be applied by means of a reduction of the water flow in the granulator or, more generally, of the vector fluid.

The same approach can be used in underwater granulators, or a stream of gas can be introduced in order to reduce the liquid fraction and consequently reduce the heat transfer.

According to the present invention, the optimum flow reduction for these granulators ranges from 1:2 to 1:100 with respect to the fluid flow-rate generally used during the granulation of the polymer.

In order to maximize the sharpening rate, it is also possible to periodically or continuously vary the heat transfer. This can be achieved by alternating the cooling fluid flow-rate between two fixed values, at regular time intervals. Said flow-rate, for example, can be varied between a reference flow-rate and 1:20 of said value, at regular time intervals of 30 seconds.

According to another operative procedure, object of the present invention, said variation in the heat transfer can be achieved by periodically interrupting the cooling flow for a predetermined time interval. For example, the cooling fluid can be directed towards the knives for 50 seconds and interrupted or deviated to another place for 10 seconds. The cycle, which lasts 60 seconds, is repeated until the sharpening has been completed.

A further reduction in the sharpening times is obtainable if the knives to be sharpened have a geometry that, upon contact with the die plate surface, the contact surface is extremely reduced.

This can be obtained by ensuring that the bottom heel angle of the blade (i.e. the angle between the die plate surface and the knife side faced said surface) is not zero. The bottom heel angle of the blade preferably ranges from 2 to 45°.

The cutting angle (i.e. the angle formed between the top and bottom heel angle) is advantageously less than 90°, preferably between 5° and 70°.

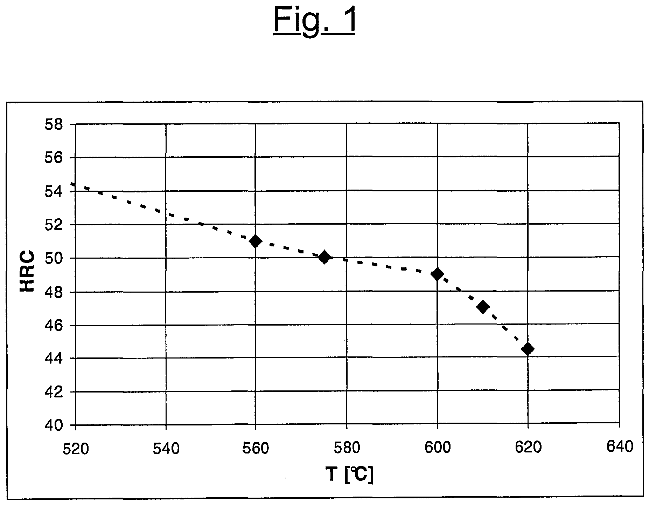

Figure 1 illustrates the hardness in Rockwell degrees Scale C, relating to the knives in function of the tempering temperature; and
Figure 2 illustrates a front view and a side view of a pair of knives for the granulation of thermoplastic polymers. The knife is fixed to the knife-holder hub by means of two bolts through the holes 23 and 24. The thickness of the cutting blade 21 and the length of the cutting blade 22 are regulated to ensure the correct blade flexibility, in order to optimize the adherence of the same to the cutting surface.
Figure 3 is a section illustrating the contact of the knife blade on the die plate surface. With reference to this figure, 32 is the bottom heel angle; 33 is the top heel angle; and 31 is the cutting angle.

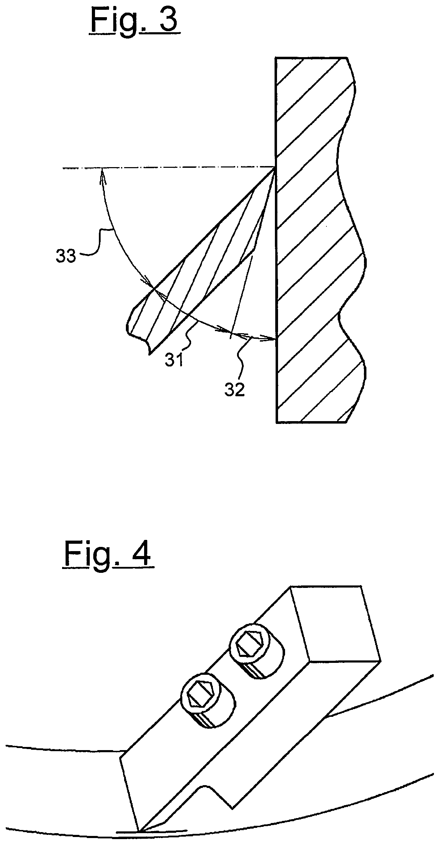

The knife position with respect to the cutting surface is illustrated in Figure 4 (where, for simplicity, the knife-holder hub is not shown).

The granulator blades with a high wear resistance and their use in the cutting of thermoplastic polymers in the molten state are now better described with reference to the enclosed non-limiting examples.

### EXAMPLE 1A

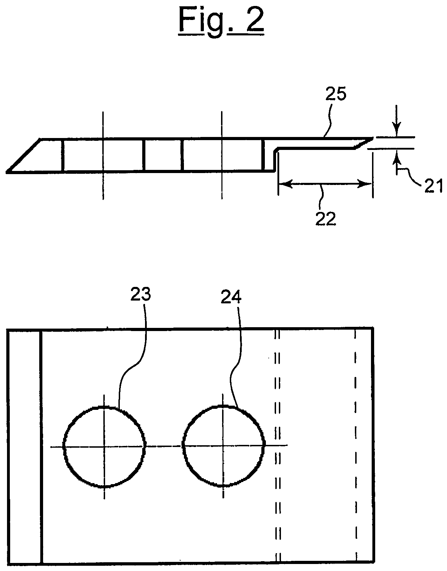

A sheet made of Vanadis 10 material, produced by Bohler-Uddeholm, is processed to obtain knives having the shape illustrated in Figure 2.

The hardness, measured before and after the processings, is equal to 58 and 56 Rockwell degrees, scale C.

The knives are inserted, kept apart, in a muffle, flushed with a nitrogen stream. The muffle kiln is turned on and heated at a rate of 10°C/minute up to 500°C, and at 2°C a minute up to the prefixed tempering temperature equal to 620°. This temperature is kept constant for three hours, the muffle is then switched-off and the knives are left to cool slowly (at about 5°C per minute). When the temperature reaches 400°C they are extracted and left to cool in calm air until room temperature is reached. The hardness, measured after the thermal treatment, is 44.5 Rockwell degrees, scale C.

The knives are assembled on the hub of the granulator and sharpened under these conditions: rotation rate 1,500 rpm; force acting on each knife, in the normal direction to the die plate surface, equal to about 80 N; cooled by a water spray (total water flow-rate: 800 1/h; velocity 15 m/s, calculated on the basis of the cross section of the water in the nozzle), nebulized in a nitrogen atmosphere. The duration of the sharpening is equal to 120 minutes, and 0.1 millimeters are eroded.

The knives so sharpened are used for the granulation of expandable thermoplastic polystyrene (average molecular weight MW equal to 180,000 g/mole, containing 5% by weight, calculated with respect to the total weight of the expandable polymer, of a mixture 75:25 of n-pentane and iso-pentane respectively), under the following conditions: rotation rate 1,500 rpm; force acting on each knife, in the normal direction to the die plate surface, equal to about 60 N; cooled by a water spray (total water flow-rate: 1,600 1/h; velocity 30 m/s, calculated on the basis of the cross section of the water in the nozzle), nebulized in a nitrogen atmosphere. The expandable polymer is homogeneously distributed in the die plate and passed through a series of holes having a diameter of 0.7 mm.

The wear is measured by means of a micrometer which measures the position of the hub where the knives are rigidly fixed on. The wear rate is calculated on the basis of the variation in the position registered every 30 minutes, if during the sharpening phase; or every 5 hours during the granulation phase. Table 2 indicates the granulation quality obtained and the minimum and maximum wear rate registered during the sharpening phase and during the granulation phase.

### COMPARATIVE EXAMPLES 1B AND 1C

Example 1A was repeated on knives coming from the same sheet but without any thermal tempering. The resulting hardness after the construction of the knives, in Rockwell degrees, scale C, is expressed in Table 1. The cutting quality obtained is indicated in Table 2.

### EXAMPLES 1D - 1G

Example 1A was repeated on knives coming from the same sheet but with thermal tempering at different temperatures. The resulting hardness in Rockwell degrees, scale C, is expressed in Table 1. The subsequent Table 2 indicates the granulation quality obtained and the minimum and maximum wear rate registered during the sharpening phase and during the granulation phase.

**TABLE 1**

| EXAMPLE | TEMPERATURE (°C) | HARDNESS (HRC) |
|---|---|---|
| 1A | 620 | 44,5 |
| COMP. 1B | - | 58 |
| COMP. 1C | - | 56 |
| 1D | 560 | 51 |
| 1E | 600 | 49 |
| 1F | 610 | 47 |
| 1G | 575 | 50 |
| COMP. 2 | - | 58 |

### EXAMPLE 2

Example 1A was repeated, but during the sharpening, the flow-rate of the cooling water is periodically regulated, in order to alternate period equal to 30 seconds, at full flow-rate (850 1/h) and a spray velocity estimated of 16 m/s, with periods of 10 seconds, during which the water flow-rate is reduced to 1/8 of former value. The duration of the sharpening is equal to 60 minutes.

### COMPARATIVE EXAMPLE 2

A sheet made of K-100 material is processed to obtain knives having the shape illustrated in Figure 2.

The hardness, measured after these processings, is equal to 58 Rockwell degrees, scale C.

The knives are assembled on the hub of the granulator and sharpened under these conditions: rotation rate 1,500 rpm; force acting on each knife, in the normal direction to the die plate surface, equal to about 40 N; cooled by a water spray at 15 m/s, nebulized in a nitrogen atmosphere. The duration of the sharpening is equal to 60 minutes.

### COMPARATIVE EXAMPLE 3

Comparative example 2 is repeated, but using K-110 as material. The sharpening is conducted under the same conditions.

Table 2 indicates the general wear resistance data and the cutting quality obtained.

With reference to Table 2, the knives prepared and used according to the Examples described herein allow to obtain a good cutting quality, and a modest or non-measured wear rate, during the granulation of the polymer. The knives prepared and used according to comparative Examples 2 and 3 also show a good granulation quality, but a high wear which significantly reduces their duration. The knives prepared according to comparative Examples 1B and 1C do not allow obtaining an acceptable granulation.

**TABLE 2**

| | | WEAR RATE (µm/hr) | | | | |
|---|---|---|---|---|---|---|
| EXAMPLES | TEMPERATURE (°C) | SHARPENING | | GRANULATION | | CUTTING QUALITY |
| | | MIN | MAX | MIN | MAX | |
| 1A | 620 | 20 | 200 | 0 | 10 | GOOD |
| COMP. 1B | - | N.D. | N.D. | N.D. | N.D. | POOR |
| COMP. 1C | - | N.D. | N.D. | N.D. | N.D. | POOR |
| 1D | 560 | 0 | 10 | 0 | 1 | GOOD |
| 1E | 600 | 6 | 50 | 0 | 5 | GOOD |
| 1F | 610 | 6 | 50 | 0 | 5 | GOOD |
| 1G | 575 | 0 | 10 | 0 | 2 | GOOD |
| 2 | 620 | 100 | 2000 | 0 | 10 | GOOD |
| COMP. 2 | - | 100 | 500 | 10 | 100 | GOOD |
| COMP. 3 NOTE. | - | 100 | 500 | 10 | 100 | GOOD |

| | | | | | | |
|---|---|---|---|---|---|---|
| N.D. = Not determinable | | | | | | |

## Claims

1. Method for sharpening knives for granulators of thermoplastic polymers which comprises mounting the knives in the hub of the granulator, putting them into rotation, subjecting them to a thrust, towards the surface of a die plate, higher than 0.5 N per knife and keeping simultaneously a cooling step by the circulation of a thermostatic liquid the flow rate of which is periodically varied, wherein said knives are heated to a temperature between 500 and 700°C for a time higher than 5 minutes and then cooled at a rate equal to or lower than 15°C/minute, before their mounting on the granulator.

2. Method according to claim 1, wherein the fluids contained in the granulation chamber are both gaseous and liquid, and wherein the volume fraction of gas is greater than 0.6 and lower than 1.

3. Use of the steel knives sharpened through the method of claim 1 or 2, in the granulation of thermoplastic polymers.

## Patentansprüche

1. Verfahren zum Schärfen von Messern für Granulatoren thermoplastischer Polymere, das die folgenden Schritte aufweist: Montieren der Messer in der Nabe des Granulators, In-Drehung-Versetzen der Messer, Aufbringen einer Schubkraft von mehr als 0,5 N pro Messer in Richtung der Oberfläche einer Formwerkzeugplatte, und gleichzeitiges Aufrechterhalten eines Kühlungsschritts durch die Zirkulation einer thermostatischen Flüssigkeit, deren Strömungsrate periodisch verändert wird, wobei die Messer vor deren Montage an dem Granulator für eine Zeitspanne von mehr als 5 Minuten auf eine Temperatur zwischen 500 und 700°C erwärmt und dann bei einer Rate von gleich oder weniger als 15°C/Minute abgekühlt werden.

2. Verfahren nach Anspruch 1, wobei die in der Granulatorkammer enthaltenen Fluide sowohl gasförmig als auch flüssig sind und wobei der Volumenanteil von Gas höher als 0,6 und niedriger als 1 ist.

3. Verwendung der mittels des Verfahrens nach Anspruch 1 oder 2 geschärften Stahlmesser bei der Granulierung von thermoplastischen Polymeren.

## Revendications

1. Procédé d'affûtage de couteaux pour appareils de granulation de polymères thermoplastiques, qui comprend les opérations suivantes :
- monter les couteaux sur le moyeu d'un granulateur,
- mettre le tout en rotation,
- et faire subir aux couteaux une force de poussée, supérieure à 0,5 N par couteau, en direction de la surface d'une plaque de filière, tout en maintenant un refroidissement en faisant circuler un liquide thermostatique dont on fait varier le débit de manière périodique,
étant entendu que lesdits couteaux, avant d'être montés dans le granulateur, sont chauffés pendant un laps de temps de plus de 5 minutes à une température de 500 à 700 °C, puis refroidis à une vitesse égale ou inférieure à 15 °C/min.

2. Procédé conforme à la revendication 1, dans lequel les fluides contenus dans la chambre de granulation sont à la fois un gaz et un liquide, la fraction volumique de gaz étant supérieure à 0.6 et inférieure à 1.

3. Utilisation de couteaux en acier, affûtés par le procédé conforme à la revendication 1 ou 2, dans la granulation de polymères thermoplastiques.
